# EUROPEAN PATENT APPLICATION

(11) **EP 3 564 413 A1**
(43) Date of publication of application: **06.11.2019**
(21) Application number: 17886848.5
(22) Date of filing: 26.12.2017
(51) Int. Cl.: C25D 5/44, B32B 15/01, C25D 5/10, C25D 5/12, C25D 5/30, C25D 5/42, H01R 13/03, H01R 43/16

(54) **SURFACE TREATMENT MATERIAL AND METHOD FOR MANUFACTURING SAME, AND ARTICLE FABRICATED USING SURFACE TREATMENT MATERIAL**

(30) Priority: 27.12.2016 JP 2016253920
(71) Applicant: Furukawa Electric Co., Ltd., Chiyoda-ku Tokyo 100-8322 (JP)
(72) Inventor: YAMAUCHI Miho, Tokyo 100-8322 (JP); KOBAYASHI Yoshiaki, Tokyo 100-8322 (JP)
(74) Representative: Weickmann & Weickmann PartmbB
(86) International application number: PCT/JP2017/046750
(87) International publication number: WO 2018/124116

(57) **Abstract**

The surface-treated material (10) according to the present invention is a surface-treated material including an electroconductive substrate (1) and a surface treatment coating film (2) including at least one metal layer formed above the electroconductive substrate (1), wherein a lowermost metal layer (21), as a metal layer included in the at least one metal layer and formed above the electroconductive substrate (1), is made of nickel, nickel alloy, cobalt, cobalt alloy, copper, or copper alloy, the surface-treated material includes an intervening layer (3) between the electroconductive substrate (1) and the surface treatment coating film (2), the intervening layer (3) containing a metal component of the electroconductive substrate (1), a metal component of the surface treatment coating film (2), and an oxygen component, and the mean thickness of the intervening layer (3) is in the range of 1.00 nm or larger and 40 nm or smaller as measured in the vertical cross-section of the surface-treated material.

## Description

### Technical Field

The present invention relates to a surface-treated material and a method for producing the same, and a member produced with this surface-treated material, and particularly relates to a technique for forming a surface treatment coating film including at least one metal layer above an electroconductive substrate, which is primarily formed of a base metal having high ionization tendency and on which it is considered difficult to successfully form a plated coating film, with good adhesion in a simple manner.

### Background Art

Metal materials including copper, copper alloy, iron, and iron alloy have been widely used for conventional materials to be plated (electroconductive substrates) for formation of an electric contact or the like, because they are inexpensive and have relatively superior properties. Such metal materials are satisfactory particularly in electroconductivity and workability, and relatively accessible. In addition, the surface can be coated in a simple manner and exhibits excellent plating adhesion. For these reasons, the metal materials are still used as mainstream materials for electroconductive substrates.

However, copper (specific gravity: 8.96) and iron (specific gravity: 7.87) are each a material with relatively high specific gravity, and thus materials with relatively low specific gravity including aluminum (specific gravity: 2.70) and magnesium (specific gravity: 1.74) have been increasingly applied in place of copper or iron, for example, to wire harness for automotive application and aircraft bodies.

Nevertheless, methods for plating the surface of aluminum, which is considered as a light metal of metals, are complicated, and it is considered difficult to form a plated coating film with good adhesion on aluminum. One of the reasons is that an oxide coating film called a "passive film" is likely to form on the surface of aluminum, and the oxide coating film exists in a stable state, and another is that it is difficult to plate a base metal such as aluminum by using a wet method.

To inhibit formation of such an oxide coating film on the surface of an aluminum-based base material, countermeasures have been conventionally taken through coating the surface of the base material with metal such as tin to maintain the contact resistance of the surface of the base material or prevent the increase thereof (e.g., Patent Literature 1).

In the case that an undercoat layer, such as a nickel layer, formed for the purpose of enhancing plating adhesion and a coating layer consisting of metal (e.g., tin, silver) for an electric contact are sequentially formed above the surface of an aluminum-based base material, for example, by using a wet plating method, sufficient adhesion is not obtained in common cases, even if the undercoat layer is formed with an oxide coating film present on the surface of the base material and the coating layer is then formed on the undercoat layer.

For this reason, pre-treatment to enhance the adhesion strength between a base material and a plated coating film (the undercoat layer and the coating layer) has been conventionally performed through zinc substitution treatment with a solution containing zinc, which is called "zincate treatment", before formation of the undercoat layer and the coating layer (e.g., Patent Literature 2).

Patent Literature 3 discloses a material as a plated aluminum alloy for electronic parts, and discloses that it is considered preferable that a zinc layer be present in a certain volume or more to obtain sufficient bonding strength. Patent Literature 3 states that plating may be performed without forming a zinc layer for a base material, but does not demonstrate any production method therefor. Accordingly, no examination is made for an effect obtained in the case that the zinc layer is reduced to the limit or in the case that the zinc layer is not formed.

Patent Literature 4 discloses that pre-treatment to form etched portions as fine concaves in the surface of a base material through etching with a solution for active acid treatment is performed to enhance the adhesion strength through anchor effect by the thus-formed etched portions as fine concaves. However, convexes and concaves in such a scale as 5 to 10 µm each serve as a stress concentration point, and a problem of deteriorated bending workability arises.

In a typical plated coating film formed after zincate treatment for the surface of an aluminum base material, a zinc layer formed, for example, with a thickness of around 100 nm is intervening between the base material and the plated coating film, and a main plating layer (plated coating film) is formed on the zinc layer. Because of the configuration, zinc from the zinc layer diffuses in the main plating layer on heating, and further diffuses to the surface layer of the main plating layer and appears there. As a result, a problem of increase in contact resistance arises, and other various problems are further caused, such as lowered wire bonding properties and lowered solder wettability. In particular, use of aluminum for windings has been examined for the purpose of weight reduction of a motor in a train or electric locomotive. Since the temperature reaches 160°C at some parts, it is required to enhance the thermal resistance of plating to be provided on the surface of an electroconductive material. Bus bars and so on of large size receive much benefit from the weight reduction provided by use of aluminum. They are produced through welding of several parts, and the temperature in the vicinity of a welded portion reaches high. Thus, plating with higher thermal resistance is required. In addition, the frequency of torrential rainfall has been increasing in recent years, and an instantaneous high electric current is caused by a stroke of lightning, and the heat as Joule heat to be then generated is, in some estimates, such that the temperature is raised to 180°C or higher. Electroconductive materials to be used for switchboards and so on are required to have thermal resistance. In addition, aluminum has been increasingly used for wire harness for automobiles, and resistance to a temperature of 150°C is required for parts around an engine and around a motor of high-output. Required in the recent circumstances as described is plating undergoes neither degradation of adhesion nor increase in contact resistance even after being retained at 200°C for 24 hours in an accelerated test.

Further, zincate treatment often causes plating failure such as generation of lumps in subsequent main plating and abnormal precipitation, depending on the condition of a zinc layer formed.

Furthermore, a drone or wearable device may allow intrusion of rain water or perspiration into the inside of the device, and high corrosion resistance is required for drones and wearable devices to ensure the long-term reliability. The same is applied to a motor of a transformer and an inverter in a saltwater environment such as wind power generation. In the case that a thin plating layer (undercoat layer) is to be formed after zinc substitution treatment, however, the plating layer is nonuniformly formed or pinholes are formed to complicate complete coating of the zinc-containing layer, and erosion proceeds preferentially along the zinc-containing layer in a saltwater environment. As a result, a problem of peeling between the undercoat layer and the base material is caused. Thus, to avoid the above-described problems, it is desirable that no zinc layer be present between a substrate and a plated coating film, and formation of a zinc layer as thin as possible is desired if formation of a zinc layer is required.

As a method for plating an aluminum base material without the intervention of a zinc layer, for example, electroless nickel with hydrofluoric acid /or a salt thereof and a nickel salt is proposed (e.g., Patent Literature 5). However, precipitation of nickel randomly occurs to cause large lattice mismatches, and as a result a sufficient adhesion is not achieved.

A nickel-based plating layer is commonly used as an undercoat layer, and formed primarily for the purpose of enhancement of adhesion and inhibition of the diffusion of zinc from a zinc layer. However, the nickel-based plating layer is typically harder than an aluminum-based base material. For this reason, if the thickness of the nickel-based plating layer is set excessively large to inhibit the diffusion of zinc, the nickel-based plating layer (coating film) disadvantageously fails to follow the deformation of an aluminum-based base material and tends to be cracked when being bent in a production process for terminals. In addition, the corrosion resistance is disadvantageously poor.

Moreover, electronic parts and so on have been increasingly downsized in recent years, and required to have flexibility under severer conditions. When a bus bar, an electric wire, or the like is produced from aluminum, the cross-sectional area needs to be large to adjust the resistance of the electroconductive material. If the electroconductive material is bent with the inner bending radius unchanged, the surface of the plating is more likely to be cracked because increased tensile strain is generated at the outer side of bending as the cross-sectional area is larger. Downsizing is similarly required in fields in which use of aluminum has become common, such as the field of bus bars for automobiles, and plating is required not to be cracked even when being processed by bending, twisting, shearing, or other processing under conditions severer than conventional ones. In addition, replacement of copper and steel with aluminum is similarly considered for latest applications requiring light weight such as drones and wearables, and plating is required not to be cracked in the surface even under severe processing for downsizing of parts. In such applications, a problem of generation of cracks is currently of concern in use of nickel-based plating with a thickness conventionally employed to inhibit the diffusion of zinc.

Methods for forming fine concaves and convexes on a surface, as disclosed in Patent Literature 6, require several minutes of treatment time, and suffer from a problem of low productivity.

### Document List

### Patent Literatures

Patent Literature 1: Japanese Patent Application Laid-Open No. 2014-63662
Patent Literature 2: Japanese Patent Application Laid-Open No. 2014-47360
Patent Literature 3: Japanese Patent Application Laid-Open No. 2012-087411
Patent Literature 4: Japanese Patent Application Laid-Open No. 2002-115086
Patent Literature 5: Japanese Patent Application Laid-Open No. 2011-99161
Patent Literature 6: Japanese Patent Application Laid-Open No. 2014-37587

### Summary of Invention

### Technical Problem

Accordingly, it is an object of the present invention to provide a surface-treated material and a method for producing the same, the method being capable of forming a surface treatment coating film above an electroconductive substrate, which is mainly formed of a base metal having high ionization tendency in particular and is considered to resist having a sound plating film formed thereon, with good adhesion in a simple manner within a short period of time, and a part produced with the surface-treated material.

### Solution to Problem

The present inventors diligently studied to solve the above problems, with focus on an intervening layer present between an electroconductive substrate and a surface treatment coating film in a surface-treated material including an electroconductive substrate and a surface treatment coating film formed above the electroconductive substrate, and found that a surface-treated material which exhibits excellent adhesion without imparting particularly large mechanical anchoring effect, what is called anchor effect, and exhibits excellent adhesion within a shorter period of time than conventional methods can be provided through controlling components contained in the intervening layer and the thickness of the intervening layer, and thus arrived at the present invention.

Specifically, summarized configurations of the present invention are as follows.
(1) A surface-treated material comprising an electroconductive substrate and a surface treatment coating film including at least one metal layer formed above the electroconductive substrate,
   wherein a lowermost metal layer, as a metal layer included in the at least one metal layer and formed above the electroconductive substrate, is made of nickel, nickel alloy, cobalt, cobalt alloy, copper, or copper alloy,
   the surface-treated material comprises an intervening layer between the electroconductive substrate and the surface treatment coating film, the intervening layer containing a metal component of the electroconductive substrate, a metal component of the surface treatment coating film, and an oxygen component, and
      a mean thickness of the intervening layer is in a range of 1.00 nm or larger and 40 nm or smaller as measured in a vertical cross-section of the surface-treated material.
(2) The surface-treated material according to (1), wherein the electroconductive substrate is made of aluminum or aluminum alloy.
(3) The surface-treated material according to (1) or (2), wherein the surface treatment coating film includes the lowermost metal layer and one or more metal layers formed above the lowermost metal layer, and each of the one or more metal layers is formed of any material selected from the group of nickel, nickel alloy, cobalt, cobalt alloy, copper, copper alloy, tin, tin alloy, silver, silver alloy, gold, gold alloy, platinum, platinum alloy, rhodium, rhodium alloy, ruthenium, ruthenium alloy, iridium, iridium alloy, palladium, and palladium alloy.
(4) The surface-treated material according to (3), wherein the one or more metal layers are formed of two or more metal layers.
(5) A method for producing the surface-treated material according to any one of (1) to (4), wherein the method comprising:
   treating a surface of the electroconductive substrate at a treatment temperature of 20 to 60°C with an electric current density of 0.1 to 20 A/dm² for a treatment time of 1 to 100 seconds by using any of three activating solutions: (1) an activating solution containing 10 to 500 mL/L of any acid solution selected from sulfuric acid, nitric acid, hydrochloric acid, hydrofluoric acid, phosphoric acid, hydrobromic acid, hydroiodic acid, acetic acid, and oxalic acid, and 0.1 to 500 g/L, as a nickel metal content, of a nickel compound selected from the group consisting of nickel sulfate, nickel nitrate, nickel chloride, nickel bromide, nickel iodide, and nickel sulfamate; (2) an activating solution containing 10 to 500 mL/L of any acid solution selected from sulfuric acid, nitric acid, hydrochloric acid, hydrofluoric acid, phosphoric acid, hydrobromic acid, hydroiodic acid, acetic acid, and oxalic acid, and 0.1 to 500 g/L, as a cobalt metal content, of a cobalt compound selected from the group consisting of cobalt sulfate, cobalt nitrate, cobalt chloride, cobalt bromide, cobalt iodide, and cobalt sulfamate; and (3) an activating solution containing 10 to 500 mL/L of any acid solution selected from sulfuric acid, nitric acid, hydrochloric acid, hydrofluoric acid, phosphoric acid, hydrobromic acid, hydroiodic acid, acetic acid, and oxalic acid, and 0.1 to 500 g/L, as a copper metal content, of a copper compound selected from the group consisting of copper sulfate, copper nitrate, copper chloride, copper bromide, and copper sulfamate, as a step of surface activation treatment.
(6) The method for producing the surface-treated material according to (5), wherein formation of the surface treatment coating film is performed by using a wet plating method.
(7) A terminal formed with the surface-treated material according to any one of (1) to (4).
(8) A connector produced with the surface-treated material according to any one of (1) to (4).
(9) A bus bar produced with the surface-treated material according to any one of (1) to (4).
(10) A lead frame produced with the surface-treated material according to any one of (1) to (4).
(11) A member for medical use, the member produced with the surface-treated material according to any one of (1) to (4).
(12) A shield case produced with the surface-treated material according to any one of (1) to (4).
(13) A coil produced with the surface-treated material according to any one of (1) to (4).
(14) A contact switch produced with the surface-treated material according to any one of (1) to (4).
(15) A cable produced with the surface-treated material according to any one of (1) to (4).
(16) A heat pipe produced with the surface-treated material according to any one of (1) to (4).
(17) A memory disk produced with the surface-treated material according to any one of (1) to (4).

### Effects of Invention

According to the present invention, a surface-treated material comprises an electroconductive substrate, in particular, an electroconductive substrate which is, for instance, aluminum or an aluminum alloy which is mainly formed of a base metal having a large ionization tendency and is considered to resist having a sound plating film formed thereon, and a surface treatment coating film that is formed of at least one metal layer which is formed above the electroconductive substrate, wherein among the at least one metal layer, the lowermost metal layer which is a metal layer formed above the electroconductive substrate is made of nickel, nickel alloy, cobalt, cobalt alloy, copper, or copper alloy; the surface-treated material includes an intervening layer between the electroconductive substrate and the surface treatment coating film, the intervening layer containing a metal component of the electroconductive substrate, a metal component of the surface treatment coating film, and an oxygen component; and the mean thickness of the intervening layer is in the range of 1.00 nm or larger and 40 nm or smaller as measured in the vertical cross-section of the surface-treated material. Accordingly, the present invention enables production of a surface-treated material in a process simpler than that for conventional surface-treated materials including a zinc-containing layer (in particular, a zincate-treated layer) intervening between an electroconductive substrate and a surface treatment coating film and having, for example, a thickness of around 100 nm, and as a result at lower cost in a safer manner, by virtue of the configuration of the surface-treated material according to the present invention. While the common general knowledge teaches that the adhesion of a surface treatment coating film to an electroconductive substrate is poor if an oxide is present between the electroconductive substrate and the surface treatment coating film, the present invention can provide a surface-treated material which exhibits excellent adhesion without imparting mechanical anchoring effect (anchor effect) and allows significant reduction of the production time, through providing an intervening layer between an electroconductive substrate and a surface treatment coating film, the intervening layer containing a metal component of the electroconductive substrate, a metal component of the surface treatment coating film, and an oxygen component, and through controlling the mean thickness of the intervening layer in the range of 1.00 nm or larger and 40 nm or smaller as measured in the vertical cross-section of the surface-treated material. Further, the present invention can provide a surface-treated material having high long-term reliability including thermal resistance and saltwater corrosion resistance, by the action of the intervening layer containing a metal component of the electroconductive substrate, a metal component of the surface treatment coating film, and an oxygen component, to function as a diffusion-preventing layer which prevents the diffusion of a metal component from the electroconductive substrate and the diffusion of a metal component from the surface treatment coating film. Thus, the present invention can provide a surface-treated material which can keep the original properties obtained after formation of the surface treatment coating film and has high long-term reliability, and various parts (products) produced with the surface-treated material, including terminals, connectors, bus bars, lead frames, members for medical use, shield cases, coils, accessories, contact switches, cables, heat pipes, and memory disks.

### Brief Description of Drawings

[Fig. 1] Fig. 1(A) is a schematic cross-sectional view of a surface-treated material according to a first embodiment of the present invention, and Fig. 1(B) is a schematic cross-sectional view of a surface-treated material according to a second embodiment of the present invention.
[Fig. 2] Fig. 2 is a schematic cross-sectional view of a surface-treated material according to a third embodiment of the present invention.
[Fig. 3] Fig. 3 illustrates results of area analysis with an STEM-EDX after processing of surface-treated materials with an FIB apparatus, and Fig. 3(A), 3(B), 3(C) and 3(D) illustrate analytical results for Comparative Example 1, Conventional Example 1, Inventive Example 3, and Inventive Example 2 (D), respectively.
[Fig. 4] Fig. 4 illustrates results of line analysis with an STEM-EDX after processing of surface-treated materials with an FIB apparatus, , and Fig. 4(A), 4(B), 4(C) and 4(D) illustrate analytical results for Comparative Example 1, Conventional Example 1, Inventive Example 3, and Inventive Example 2.

### Description of Embodiments

Hereinafter, embodiments of the present invention will be described with reference to the accompanying drawings.

### (Electroconductive substrate)

The electroconductive substrate 1 is, for example, primarily formed of a base metal, not as a limitation, having high ionization tendency. Especially, it is preferable that the electroconductive substrate 1 be made of, for example, aluminum (Al) or aluminum alloy, on which it is considered difficult to successfully form a plated coating film by using a wet plating method, from the viewpoint that the effects of the present invention are significantly exerted. Although the shape of the electroconductive substrate 1 is a streak in each drawing, the shape of the electroconductive substrate 1 may be a sheet, a wire, a bar, a tube, a foil, or another shape, and various shapes can be employed in accordance with the application.

### (Surface treatment coating film)

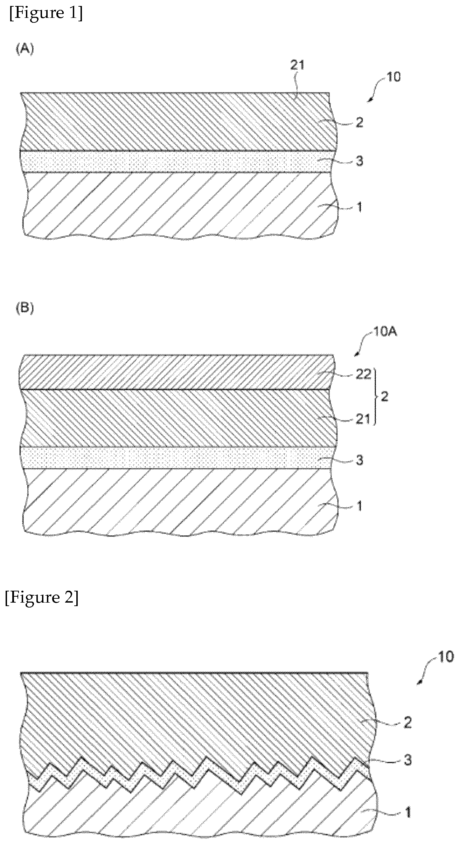

The surface treatment coating film 2 is formed of at least one metal layer, as one metal layer 21 in Fig. 1(A), and formed above the electroconductive substrate 1. Here, since the surface treatment coating film 2 can be formed of one metal layer in some cases and of two or more metal layers in other cases, the (one) metal layer 21 formed in a position nearest to the electroconductive substrate 1 is referred to as "lowermost metal layer" in the present invention, for both cases of configuration with one layer and configuration with two or more layers. Since the surface-treated material 10 illustrated in Fig. 1(A) is formed only of one layer of the metal layer formed above the electroconductive substrate 1, the metal layer 21 is a lowermost metal layer.

The lowermost metal layer 21 is a metal layer made of nickel (Ni), nickel alloy, cobalt (Co), cobalt alloy, copper (Cu), or copper alloy. In view of bending workability and corrosion resistance, it is preferable that the suitable thickness of the lowermost metal layer 21 be 0.05 µm or larger and 2.0 µm or smaller, it is more preferable that the thickness of the lowermost metal layer 21 be 0.1 µm or larger and 1.5 µm or smaller, and it is even more preferable that the thickness of the lowermost metal layer 21 be 0.2 µm or larger and 1.0 µm or smaller. Satisfactory thermal resistance is obtained if the lowermost metal layer is made of Ni, and satisfactory formability is obtained if the lowermost metal layer is made of Cu. If Ni or Co is used for the lowermost metal layer, an effect to reduce electrolytic corrosion of the aluminum substrate is exerted when the functional plating layer is scratched.

As illustrated in Fig. 1(B), the surface treatment coating film 2 may be formed of the lowermost metal layer 21 and one or more metal layers 22 (e.g., various functional plating layers) formed above the lowermost metal layer 21.

Examples of the one or more metal layers 22 to be formed above the lowermost metal layer 21 include a metal layer consisting of metal or alloy appropriately selected from nickel (Ni), nickel alloy, cobalt (Co), cobalt alloy, copper (Cu), copper alloy, tin(Sn), tin alloy, silver (Ag), silver alloy, gold (Au), gold alloy, platinum (Pt), platinum alloy, rhodium (Rh), rhodium alloy, ruthenium (Ru), ruthenium alloy, iridium (Ir), iridium alloy, palladium (Pd), and palladium alloy, in accordance with the purpose of imparting desired properties. In the case that two or more metal layers 22 are formed above the lowermost metal layer 21, a surface-treated material (plated material) 10 having excellent long-term reliability can be obtained through forming a lowermost metal layer 21 made of nickel, nickel alloy, cobalt, cobalt alloy, copper, or copper alloy above an electroconductive substrate 1 at least subjected to a step of surface activation treatment as described later, and thereafter forming a single metal layer or two or more metal layers (each having a composition different from that of the lowermost metal layer 21) each made of metal or alloy selected from nickel, nickel alloy, cobalt, cobalt alloy, copper, copper alloy, tin, tin alloy, silver, silver alloy, gold, gold alloy, platinum, platinum alloy, rhodium, rhodium alloy, ruthenium, ruthenium alloy, iridium, iridium alloy, palladium, and palladium alloy, as a coating layer to impart functions required for a part intended to the surface-treated material 10, above the lowermost metal layer 21. In particular, it is preferable that the surface treatment coating film 2 is formed of two or more metal layers 21 and 22 at least including a lowermost metal layer 21, for example, formed for the purpose of enhancement of adhesion to the electroconductive substrate 1 and a metal layer 22 as a coating layer to impart functions. In formation of the surface treatment coating film 2 formed of the lowermost metal layer 21 and the metal layer 22, for example, the surface treatment coating film 2 can be formed through forming a nickel layer as the lowermost metal layer 21 above the electroconductive substrate 1, and thereafter forming a gold plating layer 22 as the metal layer 22 to impart functions above the lowermost metal layer 21. Thus, a surface-treated material (plated material) 10 having excellent corrosion resistance can be provided. Although the method for forming each of the metal layers 21 and 22 is not limited, it is preferable to perform a wet plating method.

### (Characteristic configuration of present invention)

A characteristic configuration of the present invention lies in control of the structure between the electroconductive substrate 1 and the surface treatment coating film 2 to a suitable structure, more specifically, the configuration in which an intervening layer 3 is included between the electroconductive substrate 1 and the surface treatment coating film 2, the intervening layer 3 containing a metal component of the electroconductive substrate 1, a metal component of the surface treatment coating film 2, and an oxygen component, and the mean thickness of the intervening layer 3 is in the range of 1.00 nm or larger and 40 nm or smaller as measured in the vertical cross-section of the surface-treated material.

Typically, the electroconductive substrate 1, in particular, the electroconductive substrate 1 made of, for example, aluminum or aluminum alloy as a base metal having high ionization tendency, is subjected to substitution treatment with zinc, what is called zincate treatment, as a conventional method. In conventional zincate treatment, the thickness of a zinc-containing layer present between an electroconductive substrate and a surface treatment coating film (plated coating film) is, for example, around 100 nm, and zinc from the zinc-containing layer diffuses in the surface treatment coating film and further diffuses to the surface layer of the surface treatment coating film and appears there, which causes a problem of increase in contact resistance arises, for example, in use as an electric contact, and further causes other various problems such as lowered wire bonding properties, lowered solder wettability and lowered corrosion resistance. As a result, the properties of the surface-treated material are degraded through uses in some cases, leading to deterioration of the long-term reliability.

For this reason, it is desirable that no zinc-containing layer be present between the electroconductive substrate 1 and the surface treatment coating film 2. However, it has been considered difficult in the absence of a zinc-containing layer (in particular, zincate-treated layer) to form a surface treatment coating film (plated coating film) with good adhesion to the electroconductive substrate 1, in particular, the electroconductive substrate 1 made of a base metal having high ionization tendency, by using any conventional coating film formation technique.

In view of this, the present inventors diligently studied, and found that the surface treatment coating film 2 can be formed with good adhesion to the electroconductive substrate 1 in a simple manner, without imparting particular large mechanical anchoring effect, what is called anchor effect, by virtue of formation of an intervening layer 3 between the electroconductive substrate 1 and the surface treatment coating film 2, the intervening layer 3 containing a metal component of the electroconductive substrate 1, a metal component of the surface treatment coating film 2, and an oxygen component and formed through performing a step of surface activation treatment for the surface of the electroconductive substrate 1 (e.g., an aluminum base material) prior to formation of the surface treatment coating film (plated coating film) 2, with the effect that the oxygen component of the intervening layer 3 bonds to a metal atom forming the electroconductive substrate (e.g., aluminum atom) and the oxygen component of the intervening layer 3 bonds to a metal atom forming the surface treatment coating film 2 (e.g., nickel atom). In addition, the intervening layer 3 functions as a diffusion-preventing layer which prevents the diffusion of a metal component from the electroconductive substrate 1 and a metal component from the surface treatment coating film 2, resulting in excellent long-term reliability including thermal resistance and saltwater corrosion resistance.

The intervening layer 3 contains a metal component of the electroconductive substrate 1, a metal component of the surface treatment coating film 2, and an oxygen component, and is formed between the electroconductive substrate 1 and the surface treatment coating film 2. The metal component of the electroconductive substrate 1 contained in the intervening layer 3 may be identical to or different from the metal component of the surface treatment coating film 2. However, it is preferable that the metal component of the electroconductive substrate 1 contained in the intervening layer 3 be different from the metal component of the surface treatment coating film 2. Although the case that the electroconductive substrate 1 is completely coated with the intervening layer 3 is illustrated in each of Fig. 1(A) and Fig. 1(B), the phrase "including an intervening layer between the electroconductive substrate 1 and the surface treatment coating film 2" in the present invention refers to not only the case that the electroconductive substrate 1 is completely coated with the intervening layer 3 but also the case that only a part of the electroconductive substrate 1 is coated and the case that the intervening layer 3 is present as spots on the electroconductive substrate 1. The surface of the electroconductive substrate 1 in contact with the intervening layer 3 may be smooth as illustrated in Fig. 1(A) and Fig. 1(B), and concaves and convexes may be formed in the surface of the electroconductive substrate 1 in contact with the intervening layer 3 as illustrated in Fig. 2. It should be noted that the surface of the electroconductive substrate 1 in contact with the intervening layer 3 is not a perfect plane, although it is illustrated as a smooth interface in Fig. 1(A) and Fig. 1(B), and fine concaves and convexes are actually formed therein.

The mean thickness of the intervening layer 3 is in the range of 1.00 nm or larger and 40 nm or smaller as measured in the vertical cross-section of the surface-treated material 10. If the mean thickness is over 40 nm, the bonding strength among the metal component of the electroconductive substrate 1, the metal component of the surface treatment coating film 2, and the oxygen component in the intervening layer 3 is lower than the bonding strength between the electroconductive substrate 1 and the oxygen component of the intervening layer 3 and the bonding strength between the surface treatment coating film 2 and the oxygen component of the intervening layer 3, and peeling occurs in the inside of the intervening layer 3 and the adhesion of the surface treatment coating film 2 to the electroconductive substrate 1 tends to be lower. If the mean thickness is smaller than 1.00 nm, on the other hand, the bonding strength between the electroconductive substrate 1 and the oxygen component of the intervening layer 3 and the bonding strength between the surface treatment coating film 2 and the oxygen component of the intervening layer 3 are insufficiently exerted, and as a result the adhesion of the surface treatment coating film 2 to the electroconductive substrate 1 tends to be lower, and the saltwater corrosion resistance tends to be lower. A preferred range of the mean thickness is 5 nm or larger and 30 nm or smaller. This is the most optimal range for both adhesion and bending workability.

The intervening layer 3 can be detected, for example, by using an STEM-EDX. Specifically, when an STEM-EDX is used, the intervening layer 3 can be defined as a region where the detection intensity for the main component of the surface treatment coating film 2 is 0.5 to 2.0 times larger than the detection intensity for the main component of the electroconductive substrate 1, and the detection intensity for oxygen is 10% or higher of the sum of the detection intensity for the main component of the electroconductive substrate 1 and the detection intensity for the main component of the surface treatment coating film 2. To determine the mean thickness of the intervening layer 3, an arbitrary cross-section is formed for the surface-treated material by using a cross-section formation method such as resin embedding followed by cross-sectional polishing or FIB processing, and ion milling or a cross-section polisher, and the thickness is measured at a plurality of positions in an arbitrary observation region to calculate the mean. In the case that only a part of the electroconductive substrate 1 is coated with the intervening layer 3, or in the case that the intervening layer 3 is present as spots on the electroconductive substrate 1, the mean thickness in parts where the intervening layer 3 is present is measured.

In the present invention, not only the adhesion of the surface treatment coating film 2 to the electroconductive substrate 1 and the bending workability are improved, but also the diffusion of a metal component from the electroconductive substrate 1 and the diffusion of the metal component from the surface treatment coating film 2 can be prevented, through formation of an intervening layer 3 having a mean thickness of 1.00 nm or larger and 40 nm or smaller between the electroconductive substrate 1 and the surface treatment coating film 2, and as a result the saltwater corrosion resistance is also enhanced. Accordingly, a surface-treated material can be provided which exhibits excellent corrosion resistance, for example, in a corrosion test in which a spray test with 5% saltwater is performed for 8 hours.

### (Method for producing surface-treated material)

Hereinafter, some embodiments of the method for producing a surface-treated material according to the present invention will be described.

To produce a surface-treated material having the layered cross-sectional structure illustrated in Fig. 1, for example, a sheet, a bar, or a wire rod as a base material made of aluminum (e.g., 1000 series aluminum such as A1100 as defined in JIS H4000: 2014, and aluminum alloy (e.g., 6000 series (Al-Mg-Si) alloy such as A6061 as defined in JIS H4000: 2014)) can be sequentially subjected to a step of electrolytic degreasing, a step of surface activation treatment, and a step of forming a surface treatment coating film. It is preferable to further perform a step of water washing at each step interval, as necessary.

### (Step of electrolytic degreasing)

The step of electrolytic degreasing is a step of subjecting the electroconductive substrate 1 to electrolytic degreasing treatment. Examples thereof include a method in which the electroconductive substrate 1 is soaked, as a negative electrode, in an alkali-degreasing bath containing 20 to 200 g/L of sodium hydroxide (NaOH), and subjected to electrolytic degreasing under conditions of an electric current density of 2.5 to 5.0 A/dm², a bath temperature of 60°C, and a treatment time of 10 to 100 seconds.

### (Step of surface activation treatment)

After the completion of the step of electrolytic degreasing, the step of surface activation treatment is performed. The step of surface activation treatment is a step of performing a novel activation treatment different from conventional activation treatments, and is the most important step among the steps in production of the surface-treated material according to the present invention.

It has been considered difficult in the absence of a zinc-containing layer (in particular, zincate-treated layer) to form a surface treatment coating film (plated coating film) with good adhesion to the electroconductive substrate 1 made of a base metal having high ionization tendency in particular, by using any conventional coating film formation technique. On the other hand, it is conceivable that the present invention can form crystal nuclei or a thin film of a metal atom above the electroconductive substrate 1 before formation of the lowermost metal layer 21, the metal atom being identical to the metal atom forming the lowermost metal layer 21 (e.g., nickel atom) to be subsequently formed above the electroconductive substrate 1, through performing the step of surface activation treatment. Thereafter, the intervening layer 3 is formed between the crystal nuclei or thin film and the electroconductive substrate 1. Thereby, each of the metal component from the electroconductive substrate 1 and the metal component from the surface treatment coating film 2 can bond to the oxygen component of the intervening layer 3. For this reason, the surface treatment coating film 2 can be formed with good adhesion to the electroconductive substrate 1 in a simple manner, without formation of a zinc-containing layer containing zinc as a main component through zincate treatment or the like.

It is preferable to perform surface activation treatment by treating the surface of the electroconductive substrate 1 after being subjected to electrolytic degreasing treatment at a treatment temperature of 20 to 60°C with an electric current density of 0.1 to 20 A/dm² for a treatment time of 1 to 100 seconds by using any of three activating solutions: (1) an activating solution containing 10 to 500 mL/L of any acid solution selected from sulfuric acid, nitric acid, hydrochloric acid, hydrofluoric acid, phosphoric acid, hydrobromic acid, hydroiodic acid, acetic acid, and oxalic acid, and 0.1 to 500 g/L, as a nickel metal content, of a nickel compound selected from the group consisting of nickel sulfate, nickel nitrate, nickel chloride, nickel bromide, nickel iodide, and nickel sulfamate; (2) an activating solution containing 10 to 500 mL/L of any acid solution selected from sulfuric acid, nitric acid, hydrochloric acid, hydrofluoric acid, phosphoric acid, hydrobromic acid, hydroiodic acid, acetic acid, and oxalic acid, and 0.1 to 500 g/L, as a cobalt metal content, of a cobalt compound selected from the group consisting of cobalt sulfate, cobalt nitrate, cobalt chloride, cobalt bromide, cobalt iodide, and cobalt sulfamate; and (3) an activating solution containing 10 to 500 mL/L of any acid solution selected from sulfuric acid, nitric acid, hydrochloric acid, hydrofluoric acid, phosphoric acid, hydrobromic acid, hydroiodic acid, acetic acid, and oxalic acid, and 0.1 to 500 g/L, as a copper metal content, of a copper compound selected from the group consisting of copper sulfate, copper nitrate, copper chloride, copper bromide, and copper sulfamate. In addition, it is preferable for the activating solution to contain oxygen at a dissolved oxygen concentration of 3 to 100 ppm because the intervening layer 3 can be efficiently formed.

### (Step of forming surface treatment coating film)

After the step of surface activation treatment is performed, the step of forming a surface treatment coating film is performed.

Although the surface treatment coating film 2 may be formed with only the lowermost metal layer 21 in the step of forming a surface treatment coating film, one or more (additional) metal layers 22 can be further formed above the lowermost metal layer 21 to form the surface treatment coating film 2 with the metal layers 21 and 22, as at least two or more layers including the lowermost metal layer 21, in accordance with the purpose of imparting properties (functions) to the surface-treated material 10.

### [Step of forming lowermost metal layer]

The lowermost metal layer 21 is a metal layer formed of nickel (Ni), nickel alloy, cobalt (Co), cobalt alloy, copper (Cu), or copper alloy. The lowermost metal layer 21 can be formed by using a wet plating method through electrolytic plating or non-electrolytic plating with a plating solution containing nickel (Ni), cobalt (Co), or copper (Cu). Tables 1 to 3 show examples of the plating bath composition and plating conditions in forming the lowermost metal layer 21 by nickel (Ni) plating, cobalt (Co) plating, and copper (Cu) plating.

**[Table 1]**

| Nickel plating | | | |
|---|---|---|---|
| Plating bath composition | | Bath temperature (°C) | Current density (A/dm²) |
| Component | Concentration (g/L) | | |
| Ni(SO₃NH₂)₂▪4H₂O | 500 | 50 | 10 |
| NiCl₂ | 30 | | |
| H₃BO₃ | 30 | | |

**[Table 2]**

| Cobalt plating | | | |
|---|---|---|---|
| Plating bath composition | | Bath temperature (°C) | Current density (A/dm²) |
| Component | Concentration (g/L) | | |
| CO(SO₃NH₂)₂▪4H₂O | 500 | 50 | 10 |
| CoCl₂ | 30 | | |
| H₃BO₃ | 30 | | |

**[Table 3]**

| Copper plating | | | |
|---|---|---|---|
| Plating bath composition | | Bath temperature (°C) | Current density (A/dm²) |
| Component | Concentration (g/L) | | |
| CuSO₄▪5H₂O | 250 | 40 | 6 |
| H₂SO₄ | 50 | | |
| NaCl | 0.1 | | |

### [Step of forming metal layer other than lowermost metal layer]

When (additional) metal layers 22, which are metal layers other than the lowermost metal layer 21 of the metal layers 21 and 22 forming the surface treatment coating film 2, are formed, each metal layer 22 can be formed by using a wet plating method through electrolytic plating or non-electrolytic plating, in accordance with the purpose of imparting properties (functions) to the surface-treated material. Tables 1 to 10 show examples of the plating bath composition and plating conditions in forming a metal layer by nickel (Ni) plating, cobalt (Co) plating, copper (Cu) plating, tin (Sn) plating, silver (Ag) plating, silver (Ag)-tin (Sn) plating, silver (Ag)-palladium (Pd) plating, gold (Au) plating, palladium (Pd) plating, and rhodium (Rh) plating.

**[Table 4]**

| Tin plating | | | |
|---|---|---|---|
| Plating bath composition | | Bath temperature (°C) | Current density (A/dm²) |
| Component | Concentration (g/L) | | |
| SnSO₄ | 80 | 30 | 2 |
| H₂SO₄ | 80 | | |

**[Table 5]**

| Silver | | | |
|---|---|---|---|
| plating | | | |
| Plating bath composition | | Bath temperature (°C) | Current density (A/dm²) |
| Component | Concentration (g/L) | | |
| AgCN | 50 | 30 | 1 |
| KCN | 100 | | |
| K₂CO₃ | 30 | | |

**[Table 6]**

| Silver-tin alloy plating | | | |
|---|---|---|---|
| Plating bath composition | | Bath temperature (°C) | Current density (A/dm²) |
| Component | Concentration (g/L) | | |
| AgCN | 10 | 40 | 1 |
| K₂Sn(OH)₆ | 80 | | |
| KCN | 100 | | |
| NaOH | 50 | | |

**[Table 7]**

| Silver-palladium alloy plating | | | |
|---|---|---|---|
| Plating bath composition | | Bath temperature (°C) | Current density (A/dm²) |
| Component | Concentration (g/L) | | |
| KAg(CN)₂ | 20 | 40 | 0.5 |
| PdCl₂ | 25 | | |
| K₄O₇P₂ | 60 | | |
| KSCN | 150 | | |

**[Table 8]**

| Gold plating | | | |
|---|---|---|---|
| Plating bath composition | | Bath temperature (°C) | Current density (A/dm²) |
| Component | Concentration (g/L) | | |
| KAu(CN)₂ | 14.6 | 40 | 1 |
| C₆H₈O₇ | 150 | | |
| K₂C₆H₄O₇ | 180 | | |

**[Table 9]**

| Palladium plating | | | |
|---|---|---|---|
| Plating bath composition | | Bath temperature (°C) | Current density (A/dm²) |
| Component | Concentration (g/L) | | |
| Pd(NH₃)₂Cl₂ | 45g/L | 60 | 5 |
| NH₄OH | 90ml/L | | |
| (NH₄)₂SO₄ | 50g/L | | |
| Pallasigma brightener (made by Matsuda Sangyo Co., Ltd.) | 10ml/L | | |

**[Table 10]**

| Rhodium plating | | |
|---|---|---|
| Plating liquid | Bath temperature | Current density |
| RHODEX (trade name, made by Electroplating Engineers of Japan Ltd.) | 50°C | 1.3A/dm² |

In accordance with the application, the surface treatment coating film 2 can be formed in an arbitrarily modified layered structure with appropriate combination of the lowermost metal layer 21 and the one or more metal layers 22 to be formed above the lowermost metal layer 21, as described above. In the case that the surface-treated material according to the present invention is used for a lead frame, for example, functionalities including solder wettability, wire bonding properties, and improved reflectance can be imparted through formation of a nickel plating layer as the lowermost metal layer 21 above the electroconductive substrate 1 followed by formation of the metal layer (functional plating layer) 22 formed of one or more platings selected from silver plating, silver alloy plating, palladium plating, palladium alloy plating, gold plating, and gold alloy plating above the lowermost metal layer 3 to form the surface treatment coating film 2. In the case that the surface-treated material according to the present invention is used for an electric contact material, an electric contact material with stable contact resistance can be provided through formation of a copper plating layer as the lowermost metal layer 21 above the electroconductive substrate 1 followed by formation of the metal layer (functional plating layer) 22 formed of silver plating or silver alloy plating to form the surface treatment coating film 2. Thus, an excellent surface-treated material 10 having properties necessary for intended application can be provided through formation of the surface treatment coating film 2 with the two or more metal layers 21 and 22 including the lowermost metal layer 21.

In place of base materials conventionally used, including iron, iron alloy, copper, and copper alloy, a lighter base material such as aluminum and aluminum alloy can be used for the base material (electroconductive substrate) of the surface-treated material according to the present invention, and the surface-treated material according to the present invention can be applied to various parts (products) including terminals, connectors, bus bars, lead frames, members for medical use (e.g., guide wires for catheters, stents, artificial joints), shield cases (e.g., for electromagnetic-shielding), coils (e.g., for motors), accessories (e.g., necklaces, earrings, rings), contact switches, cables (e.g., wire harness for aircrafts), heat pipes, and memory disks. This is because a configuration allowing tolerance in usage environments for conventional products formed of iron, iron alloy, copper, or copper alloy is obtained through achieving surface activation for a base material without the presence of a conventional zinc-containing layer (in particular, zincate-treated layer) as thick as 100 nm between the base material and the surface treatment coating film, and thus the surface-treated material according to the present invention can be used for various products particularly requiring weight reduction, including wire harness for automobiles, housings for aerospace application, and electromagnetic shield cases.

It should be noted that the above-described matters merely illustrate some embodiments of the present invention as examples, and various modifications within the scope of the appended claims can be made.

### Examples

Hereinafter, the present invention will be described in more detail on the basis of Examples. However, the present invention is never limited to them.

### (Inventive Examples 1 to 37)

In each of Inventive Examples 1 to 37, a surface of an aluminum-based base material (size: 0.2 mm × 30 mm × 30 mm) as listed in Table 11 was subjected to electrolytic degreasing treatment under the above-described conditions, and thereafter surface activation treatment was performed. In Inventive Examples 1 to 16 and 19 to 21, the surface activation treatment was a treatment at a treatment temperature of 20 to 60°C with an electric current density of 0.1 to 20 A/dm² for a treatment time of 1 to 100 seconds by using an activating solution containing 10 to 500 mL/L in total of one or more acid solutions selected from sulfuric acid, nitric acid, hydrochloric acid, hydrofluoric acid, phosphoric acid, hydrobromic acid, hydroiodic acid, acetic acid, and oxalic acid and 0.1 to 500 g/L, as a nickel metal content, of a nickel compound selected from the group consisting of nickel sulfate, nickel nitrate, nickel chloride, nickel bromide, nickel iodide, and nickel sulfamate. In Inventive Example 17, the surface activation treatment was a treatment at a treatment temperature of 30°C with an electric current density of 2 A/dm² for a treatment time of 20 seconds by using an activating solution containing 300 mL/L of any acid solution selected from sulfuric acid, nitric acid, hydrochloric acid, hydrofluoric acid, phosphoric acid, hydrobromic acid, hydroiodic acid, acetic acid, and oxalic acid and 50 g/L, as a cobalt metal content, of a cobalt compound selected from the group consisting of cobalt sulfate, cobalt nitrate, cobalt chloride, cobalt bromide, cobalt iodide, and cobalt sulfamate. In Inventive Examples 18 and 22 to 37, the surface activation treatment was a treatment at a treatment temperature of 20 to 60°C with an electric current density of 0.1 to 20 A/dm² for a treatment time of 1 to 100 seconds by using an activating solution containing 10 to 500 mL/L of any acid solution selected from sulfuric acid, nitric acid, hydrochloric acid, hydrofluoric acid, phosphoric acid, hydrobromic acid, hydroiodic acid, acetic acid, and oxalic acid and 0.1 to 500 g/L, as a copper metal content, of a copper compound selected from the group consisting of copper sulfate, copper nitrate, copper chloride, copper bromide, and copper sulfamate. Thereafter, a surface treatment coating film 2 formed of a lowermost metal layer 21 and a coating metal layer 22 formed above the lowermost metal layer 21 was formed through the above-described treatment to form a surface treatment coating film. Thus, the surface-treated material 10 according to the present invention was produced. The type of a base material (electroconductive substrate 1), the type of a metal compound contained in an activating solution for surface activation treatment, the thickness of the intervening layer 3, and the types of metal compounds forming the lowermost metal layer 21 and the coating metal layer 22 and the mean thicknesses of them are listed in Table 11. Plating conditions listed in Tables 1 to 10 were used for the conditions for formation of the metal layers 21 and 22 forming the surface treatment coating film 2.

### (Comparative Example 1)

In Comparative Example 1, the step of electrolytic degreasing was performed in the same manner as in Inventive Examples, and thereafter surface activation treatment was performed. The surface activation treatment was a treatment at a treatment temperature of 10°C with an electric current density of 0.05 A/dm² for a treatment time of 0.5 seconds by using an activating solution containing 200 mL/L of any acid solution selected from sulfuric acid, nitric acid, hydrochloric acid, hydrofluoric acid, and phosphoric acid and 10 g/L, as a nickel metal content, of a nickel compound selected from the group consisting of nickel sulfate, nickel nitrate, nickel chloride, and nickel sulfamate. Thereafter, a surface treatment coating film formed of two metal layers formed of a nickel plating layer and a gold plating layer each having a thickness as listed in Table 12 was formed through the above-described treatment to form a surface treatment coating film. Thus, a surface-treated material was produced. In the surface-treated material produced in Comparative Example 1, the mean thickness of the intervening layer 3 was smaller than 1.00 nm because the treatment temperature was low, the electric current density was small, and the treatment time was short.

### (Comparative Example 2)

In Comparative Example 2, the step of electrolytic degreasing was performed in the same manner as in Inventive Examples, and thereafter surface activation treatment was performed. The surface activation treatment was a treatment at a treatment temperature of 50°C with an electric current density of 5 A/dm² for a treatment time of 150 seconds by using an activating solution containing 200 mL/L of any acid solution selected from sulfuric acid, nitric acid, hydrochloric acid, hydrofluoric acid, and phosphoric acid and 10 g/L, as a nickel metal content, of a nickel compound selected from the group consisting of nickel sulfate, nickel nitrate, nickel chloride, and nickel sulfamate. Thereafter, a surface treatment coating film formed of two metal layers formed of a nickel plating layer and a gold plating layer each having a thickness as listed in Table 12 was formed through the above-described treatment to form a surface treatment coating film. Thus, a surface-treated material was produced. In the surface-treated material produced in Comparative Example 2, the mean thickness of the intervening layer 3 was over 40 nm because the electric current density was large and the treatment time was long.

### (Conventional Example 1)

In Conventional Example 1, a surface of an aluminum base material (size: 0.2 mm × 30 mm × 30 mm) as listed in Table 11 was subjected to electrolytic degreasing treatment under the above-described conditions, and thereafter conventional zinc substitution treatment (zincate treatment) was performed to form a zinc-containing layer with a thickness of 110 nm. Thereafter, a surface treatment coating film formed of two metal layers formed of a nickel plating layer and a gold plating layer each having a thickness listed in Table 12 was formed through the above-described treatment to form a surface treatment coating film, without performing any surface activation treatment. Thus, a surface-treated material was produced.

**[Table 11]**

| Test material No. | Type of Al-based material (substrate 1) | Surface activation treatment | Intervening layer 3 | Surface treatment film 2 | | | |
|---|---|---|---|---|---|---|---|
| | | Type of metal compound contained in activation treatment solution | Average thickness (nm) | Lowermost metal layer 21 | | Coating metal layer 22 | |
| | | | | Metal species | Thickness (µm) | Metal species | Thickness (µm) |
| Inventive Example 1 | A6061 | Ni | 1.2 | Ni | 0.5 | Au | 0.1 |
| Inventive Example 2 | A6061 | Ni | 225 | Ni | 0.5 | Au | 0.1 |
| Inventive Example 3 | A6061 | Ni | 6.64 | Ni | 0.5 | Au | 0.1 |
| Inventive Example 4 | A6061 | Ni | 21 | Ni | 0.5 | Au | 0.1 |
| Inventive Example 5 | A6061 | Ni | 28 | Ni | 0.5 | Au | 0.1 |
| Inventive Example 6 | A6061 | Ni | 32 | Ni | 0.5 | Au | 0.1 |
| Inventive Example 7 | A6061 | Ni | 11 | Ni | 0.08 | Au | 0.1 |
| Inventive Example 8 | A6061 | Ni | 11 | Ni | 0.15 | Au | 0.1 |
| Inventive Example 9 | A6061 | Ni | 11 | Ni | 0.9 | Au | 0.1 |
| Inventive Example 10 | A6061 | Ni | 11 | Ni | 1.3 | Au | 0.1 |
| Inventive Example 11 | A6061 | Ni | 11 | Ni | 1.7 | Au | 0.1 |
| Inventive Example 12 | A6061 | Ni | 11 | Ni | 2.3 | Au | 0.1 |
| Inventive Example 13 | A1100 | Ni | 11 | Ni | 0.5 | Au | 0.1 |
| Inventive Example 14 | A5052 | Ni | 11 | Ni | 0.5 | Au | 0.1 |
| Inventive Example 15 | A3004 | Ni | 11 | Ni | 0.5 | Au | 0.1 |
| Inventive Example 16 | A4043 | Ni | 11 | Ni | 0.5 | Au | 0.1 |
| Inventive Example 17 | A6061 | Co | 11 | Co | 0.5 | Au | 0.1 |
| Inventive Example 18 | A6061 | Cu | 11 | Cu | 0.5 | Au | 0.1 |
| Inventive Example 19 | A6061 | Ni | 11 | Ni | 0.5 | Ag | 1 |
| Inventive Example 20 | A6061 | Ni | 11 | Ni | 0.5 | Sn | 2 |
| Inventive Example 21 | A6061 | Ni | 11 | Ni | 0.5 | Pd | 0.1 |
| Inventive Example 22 | A6061 | Cu | 2.48 | Cu | 0.5 | Au | 0.1 |
| Inventive Example 23 | A6061 | Cu | 7.42 | Cu | 0.5 | Au | 0.1 |
| Inventive Example 24 | A6061 | Cu | 16 | Cu | 0.5 | Au | 0.1 |
| Inventive Example 25 | A6061 | Cu | 31 | Cu | 0.5 | Au | 0.1 |
| Inventive Example 26 | A6061 | Cu | 14 | Cu | 0.07 | Au | 0.1 |
| Inventive Example 27 | A6061 | Cu | 14 | Cu | 0.18 | Au | 0.1 |
| Inventive Example 28 | A6061 | Cu | 14 | Cu | 0.91 | Au | 0.1 |
| Inventive Example 29 | A6061 | Cu | 14 | Cu | 1.4 | Au | 0.1 |
| Inventive Example 30 | A6061 | Cu | 14 | Cu | 2.2 | Au | 0.1 |
| Inventive Example 31 | A6061 | Cu | 14 | Cu | 0.5 | Au | 0.1 |
| Inventive Example 32 | A1100 | Cu | 14 | Cu | 0.5 | Au | 0.1 |
| Inventive Example 33 | A5052 | Cu | 14 | Cu | 0.5 | Au | 0.1 |
| Inventive Example 34 | A3004 | Cu | 14 | Cu | 0.5 | Au | 0.1 |
| Inventive Example 35 | A4043 | Cu | 14 | Cu | 0.5 | Au | 0.1 |
| Inventive Example 36 | A6061 | Cu | 14 | Cu | 0.5 | Sn | 2 |
| Inventive Example 37 | A6061 | Cu | 14 | Cu | 0.5 | Pd | 0.1 |
| Comparative Example 1 | A6061 | Ni | 0.98 | Ni | 0.5 | Au | 0.1 |
| Comparative Example 2 | A6061 | Ni | 48 | Ni | 0.5 | Au | 0.1 |
| Conventional Example 1 | A6061 | Zn | 17.5 | Ni | 0.5 | Au | 0.1 |

### (Evaluation methods)

### <Adhesion to base material>

### <Adhesion of surface treatment coating film to base material (electroconductive substrate>

The adhesion of a surface treatment coating film to a base material (hereinafter, simply referred to as "adhesion") was evaluated by performing a peeling test for each of the test materials (surface-treated materials) produced by using the above-described methods. The peeling test performed was in accordance with "15.1 Method of tape test" in "Methods of adhesion test for metallic coatings" defined in JIS H 8504: 1999. The evaluation results of adhesion are shown in Table 12. For adhesion shown in Table 12, a case that peeling of plating was not found was rated as "Excellent", a case that 95% or larger of the test area was satisfactorily adhering as "Good", a case that 85% or larger and smaller than 95% of the test area was satisfactorily adhering as "Acceptable", and a case that the adhering region was smaller than 85% of the test area as "Unacceptable". In this test, an adhesion corresponding to "Excellent", "Good", or "Acceptable" was determined as acceptance.

### <Bending workability>

A V-bending test at a bending radius of 0.5 mm in the direction perpendicular to streaks generated in rolling (direction of rolling) was performed for each of the test materials (surface-treated materials) produced by using the above-described methods, and thereafter the bending workability was evaluated through surface observation for the top part by using a microscope (VHX200; from KEYENCE CORPORATION) at an observation magnification of 200×. The evaluation results are shown in Table 12. For bending workability shown in Table 12, a case that completely no crack was found in the surface of the top part was rated as "Excellent", a case that a wrinkle, not a crack, was generated as "Good", a case that a minor crack was generated as "Acceptable", and a case that a relatively large crack was generated as "Unacceptable". In this test, a bending workability corresponding to "Excellent", "Good", or "Acceptable" was determined as acceptance.

### <Method for measuring contact resistance>

The contact resistance of each of the test materials (surface-treated materials) produced by using the above-described methods was measured by using a four-terminal method. In the measurement, a resistance value when 10 mA of an electric current was applied under conditions of Ag probe radius R = 2 mm and 0.1 N loading was measured 10 times, and the mean value was calculated. The evaluation results are shown in Table 12. For contact resistance shown in Table 12, a case that the contact resistance was 10 mΩ or lower was rated as "Excellent", a case that the contact resistance was higher than 10 mΩ and 50 mΩ or lower as "Good", a case that the contact resistance was higher than 50 mΩ and 100 mΩ or lower as "Acceptable", and a case that the contact resistance was higher than 100 mΩ as "Unacceptable". In this test, a contact resistance corresponding to "Excellent", "Good", or "Acceptable" was determined as acceptance.

### <Solder wettability>

Solder wetting time was measured with a solder checker (SAT-5100 (product name, from RHESCA Co., Ltd.)) for each of the test materials (surface-treated materials) produced by using the above-described methods, and the solder wettability was evaluated from the measured value. The evaluation results are shown in Table 12. Specific measurement conditions for solder wettability shown in Table 12 are conditions as shown below, and a case that the solder wetting time was shorter than 3 second was rated as "Excellent", a case that the solder wetting time was 3 seconds or longer and shorter than 5 seconds as "Good", a case that the solder wetting time was 5 seconds or longer and shorter than 10 seconds as "Acceptable", and a case that bonding was not achieved even after 10 seconds of soaking as "Unacceptable". In this test, a solder wettability corresponding to "Excellent", "Good", or "Acceptable" was determined as acceptance.

Type of solder: Sn-3Ag-0.5Cu
Temperature: 250°C
Size of test piece: 10 mm × 30 mm
Flux: isopropyl alcohol-25% rosin
Soaking rate: 25 mm/sec
Soaking time: 10 seconds
Soaking depth: 10 mm

### <Saltwater corrosion resistance>

Saltwater corrosion resistance was evaluated by performing a saltwater spray test with 5% NaCl aqueous solution at 35 ± 5°C for each of the test materials (surface-treated materials) produced by using the above-described methods. Three samples were prepared for each test material, and the duration of the saltwater spray test was set to 1 hour, 8 hours, and 24 hours for the respective samples. The evaluation was performed on the basis of a rating number (RN) method, which is used for rating of test results in a saltwater spray test method. The evaluation results are shown in Table 12. For saltwater corrosion resistance shown in Table 12, a case that RN was 9.5 or higher was rated as "Excellent", a case that RN was 8 or higher and lower than 9.5 as "Good", a case that RN was 7 or higher and lower than 8 as "Acceptable", and a case that RN was lower than 7 as "Unacceptable". In this test, a saltwater corrosion resistance corresponding to "Excellent", "Good", or "Acceptable" was determined as acceptance.

**[Table 12]**

| Test material No. | Performance evaluation | | | | | | |
|---|---|---|---|---|---|---|---|
| | Adhesion | Bending workability | Contact resistance | Solder wettability | Saltwater spray test | | |
| | | | | | 1h | 8h | 24h |
| Inventive Example 1 | ○ | ⊚ | ⊚ | ⊚ | ○ | ○ | Δ |
| Inventive Example 2 | ○ | ⊚ | ⊚ | ⊚ | ⊚ | ○ | Δ |
| Inventive Example 3 | ⊚ | ⊚ | ⊚ | ⊚ | ⊚ | ⊚ | ⊚ |
| Inventive Example 4 | ⊚ | ⊚ | ⊚ | ⊚ | ⊚ | ⊚ | ⊚ |
| Inventive Example 5 | ⊚ | ⊚ | ⊚ | ⊚ | ⊚ | ⊚ | ⊚ |
| Inventive Example 6 | ⊚ | ○ | ⊚ | ⊚ | ⊚ | ⊚ | ⊚ |
| Inventive Example 7 | ⊚ | ⊚ | ⊚ | ⊚ | ○ | Δ | Δ |
| Inventive Example 8 | ⊚ | ⊚ | ⊚ | ⊚ | ○ | ○ | Δ |
| Inventive Example 9 | ⊚ | ⊚ | ⊚ | ⊚ | ⊚ | ⊚ | ⊚ |
| Inventive Example 10 | ⊚ | ○ | ⊚ | ⊚ | ⊚ | ⊚ | ⊚ |
| Inventive Example 11 | ⊚ | ○ | ⊚ | ⊚ | ⊚ | ⊚ | ⊚ |
| Inventive Example 12 | ⊚ | Δ | ⊚ | ⊚ | ⊚ | ⊚ | ⊚ |
| Inventive Example 13 | ⊚ | ⊚ | ⊚ | ⊚ | ⊚ | ⊚ | ⊚ |
| Inventive Example 14 | ⊚ | ⊚ | ⊚ | ⊚ | ⊚ | ⊚ | ⊚ |
| Inventive Example 15 | ⊚ | ⊚ | ⊚ | ⊚ | ⊚ | ⊚ | ⊚ |
| Inventive Example 16 | ⊚ | ⊚ | ⊚ | ⊚ | ⊚ | ⊚ | ⊚ |
| Inventive Example 17 | ⊚ | ⊚ | ⊚ | ⊚ | ⊚ | ⊚ | ⊚ |
| Inventive Example 18 | ⊚ | ⊚ | ⊚ | ⊚ | ⊚ | ⊚ | ⊚ |
| Inventive Example 19 | ⊚ | ⊚ | ⊚ | ⊚ | ⊚ | ⊚ | ⊚ |
| Inventive Example 20 | ⊚ | ⊚ | ⊚ | ⊚ | ⊚ | ⊚ | ⊚ |
| Inventive Example 21 | ⊚ | ⊚ | ⊚ | ⊚ | ⊚ | ⊚ | ⊚ |
| Inventive Example 22 | ○ | ⊚ | ⊚ | ⊚ | ⊚ | ○ | Δ |
| Inventive Example 23 | ⊚ | ⊚ | ⊚ | ⊚ | ⊚ | ⊚ | ⊚ |
| Inventive Example 24 | ⊚ | ⊚ | ⊚ | ⊚ | ⊚ | ⊚ | ⊚ |
| Inventive Example 25 | ⊚ | ○ | ⊚ | ⊚ | ⊚ | ⊚ | ⊚ |
| Inventive Example 26 | ⊚ | ⊚ | ⊚ | ⊚ | ○ | Δ | Δ |
| Inventive Example 27 | ⊚ | ⊚ | ⊚ | ⊚ | ○ | ○ | Δ |
| Inventive Example 28 | ⊚ | ⊚ | ⊚ | ⊚ | ⊚ | ⊚ | ⊚ |
| Inventive Example 29 | ⊚ | ⊚ | ⊚ | ⊚ | ⊚ | ⊚ | ⊚ |
| Inventive Example 30 | ⊚ | ○ | ⊚ | ⊚ | ⊚ | ⊚ | ⊚ |
| Inventive Example 31 | ⊚ | ⊚ | ⊚ | ⊚ | ⊚ | ⊚ | ⊚ |
| Inventive Example 32 | ⊚ | ⊚ | ⊚ | ⊚ | ⊚ | ⊚ | ⊚ |
| Inventive Example 33 | ⊚ | ⊚ | ⊚ | ⊚ | ⊚ | ⊚ | ⊚ |
| Inventive Example 34 | ⊚ | ⊚ | ⊚ | ⊚ | ⊚ | ⊚ | ⊚ |
| Inventive Example 35 | ⊚ | ⊚ | ⊚ | ⊚ | ⊚ | ⊚ | ⊚ |
| Inventive Example 36 | ⊚ | ⊚ | ⊚ | ⊚ | ⊚ | ⊚ | ⊚ |
| Inventive Example 37 | ⊚ | ⊚ | ⊚ | ⊚ | ⊚ | ⊚ | ⊚ |
| Comparative Example 1 | × | ⊚ | ⊚ | ⊚ | ○ | Δ | Δ |
| Comparative Example 2 | × | ⊚ | ⊚ | ⊚ | ⊚ | ⊚ | ⊚ |
| Conventional Example 1 | ○ | ⊚ | ⊚ | ⊚ | ⊚ | Δ | × |

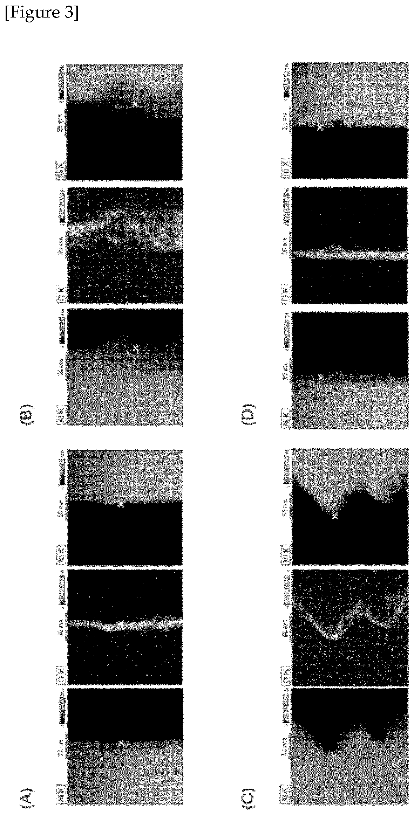

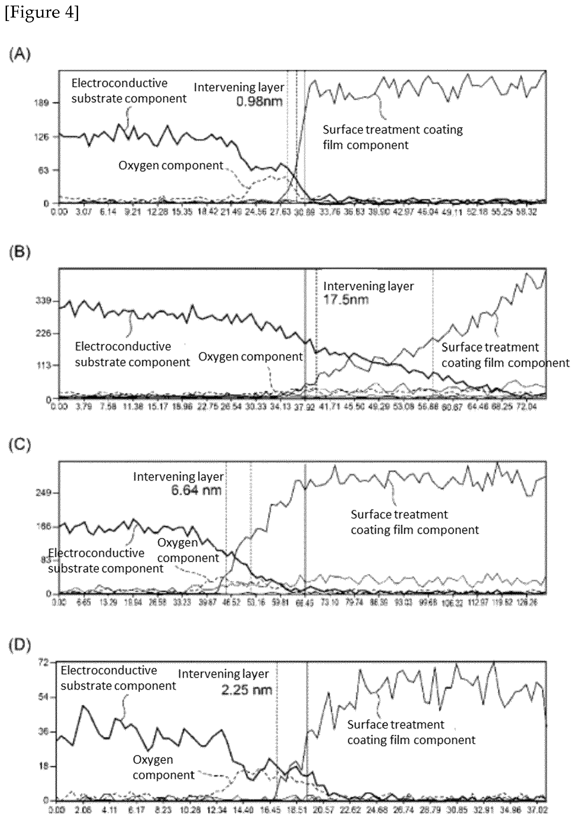

As demonstrated in Table 12, the adhesion, bending workability, and saltwater corrosion resistance are good and the contact resistance is a low value in any of Inventive Examples 1 to 37. Fig. 3(D) and Fig. 4(D) show the results of area analysis and line analysis, respectively, with an STEM-EDX for the surface-treated material in Inventive Example 2. From Fig. 3(D) and Fig. 4(D), it can be understood that an intervening layer containing a metal component of the electroconductive substrate (aluminum), a metal component of the surface treatment coating film (nickel), and an oxygen component is present in a generally linear manner with a thickness of 2.25 nm between the aluminum-based base material and the nickel plating layer. Fig. 3(C) and Fig. 4(C) show the results of area analysis and line analysis, respectively, with an STEM-EDX for the surface-treated material in Inventive Example 3. From Fig. 3(C) and Fig. 4(C), it can be understood that an intervening layer containing a metal component of the electroconductive substrate (aluminum), a metal component of the surface treatment coating film (nickel), and an oxygen component is present in a wavy manner with a thickness of 6.64 nm between the aluminum-based base material and the nickel plating layer. While Figs. 3(C) and 3(D) and Figs. 4(C) and 4(D) show the analysis results for Inventive Examples 2 and 3, it was confirmed also for Inventive Examples 1 and 4 to 37 that an intervening layer containing a metal component of the electroconductive substrate (aluminum), a metal component of the surface treatment coating film, and an oxygen component is present.

In Comparative Example 1, in contrast, the adhesion was poor because the mean thickness of the intervening layer was as thin as 0.98 nm. In Comparative Example 2, the adhesion was poor because the mean thickness of the intervening layer was as thick as 48 nm. In Conventional Example 1, the saltwater corrosion resistance was poor because a zinc-containing layer was formed on the aluminum-based base material by performing zincate treatment for the aluminum-based base material. Fig. 3(A) and Fig. 4(A) show the results of area analysis and line analysis, respectively, with an STEM-EDX for the surface-treated material in Comparative Example 1. From Fig. 3(A) and Fig. 4(A), it can be understood that an intervening layer containing a metal component of the electroconductive substrate (aluminum), a metal component of the surface treatment coating film (nickel), and an oxygen component is present in a generally linear manner with a thickness of 0.98 nm between the aluminum-based base material and the nickel plating layer. Fig. 3(B) and Fig. 4(B) show the results of area analysis and line analysis, respectively, with an STEM-EDX for the surface-treated material in Conventional Example 1. From Fig. 3(B) and Fig. 4(B), it can be understood that an intervening layer containing a metal component of the electroconductive substrate (aluminum), a metal component of the surface treatment coating film (nickel), and an oxygen component is present with a thickness of 17.5 nm between the aluminum-based base material and the nickel plating layer.

### Industrial Applicability

According to the present invention, a surface-treated material comprises an electroconductive substrate, in particular, an electroconductive substrate which is aluminum or an aluminum alloy which is mainly formed of a base metal having a large ionization tendency and is considered to resist having a sound plating film formed thereon, and a surface treatment coating film that is formed of at least one metal layer which is formed above the electroconductive substrate, wherein among the at least one metal layer, the lowermost metal layer which is a metal layer formed above the electroconductive substrate is made of nickel, nickel alloy, cobalt, cobalt alloy, copper, or copper alloy; the surface-treated material includes an intervening layer between the electroconductive substrate and the surface treatment coating film, the intervening layer containing a metal component of the electroconductive substrate, a metal component of the surface treatment coating film, and an oxygen component; and the mean thickness of the intervening layer is in the range of 1.00 nm or larger and 40 nm or smaller as measured in the vertical cross-section of the surface-treated material. Accordingly, the present invention enables production of a surface-treated material in a process simpler than that for conventional surface-treated materials including a zinc-containing layer (in particular, a zincate-treated layer) intervening between an electroconductive substrate and a surface treatment coating film and having, for example, a thickness of around 100 nm, and as a result at lower cost in a safer manner. In addition, a surface treatment coating film can be formed with good adhesion to an electroconductive substrate in a simple manner, without imparting paerticular large mechanical anchoring effect, what is called anchor effect, by forming an intervening layer having the specified mean thickness, with the effect that the oxygen component of the intervening layer bonds to a metal atom forming the electroconductive substrate (e.g., an aluminum atom) and the oxygen component of the intervening layer bonds to a metal atom forming the surface treatment coating film (e.g., a nickel atom). Thus, the present invention can provide a surface-treated material having high long-term reliability and a method for producing the surface-treated material, and various parts (products) produced with the surface-treated material, including terminals, connectors, bus bars, lead frames, members for medical use, shield cases, coils, accessories, contact switches, cables, heat pipes, and memory disks.

### List of Reference Signs

- 10, 10A: surface-treated material
- 1: electroconductive substrate (or base material)
- 2: surface treatment coating film
- 21: lowermost metal layer
- 22: metal layer

## Claims

1. A surface-treated material comprising an electroconductive substrate and a surface treatment coating film including at least one metal layer formed above the electroconductive substrate,
wherein a lowermost metal layer, as a metal layer included in the at least one metal layer and formed above the electroconductive substrate, is made of nickel, nickel alloy, cobalt, cobalt alloy, copper, or copper alloy,
the surface-treated material comprises an intervening layer between the electroconductive substrate and the surface treatment coating film, the intervening layer containing a metal component of the electroconductive substrate, a metal component of the surface treatment coating film, and an oxygen component, and
a mean thickness of the intervening layer is in a range of 1.00 nm or larger and 40 nm or smaller as measured in a vertical cross-section of the surface-treated material.

2. The surface-treated material according to claim 1, wherein the electroconductive substrate is made of aluminum or aluminum alloy.

3. The surface-treated material according to claim 1 or 2, wherein the surface treatment coating film includes the lowermost metal layer and one or more metal layers formed above the lowermost metal layer, and each of the one or more metal layers is formed of any material selected from the group of nickel, nickel alloy, cobalt, cobalt alloy, copper, copper alloy, tin, tin alloy, silver, silver alloy, gold, gold alloy, platinum, platinum alloy, rhodium, rhodium alloy, ruthenium, ruthenium alloy, iridium, iridium alloy, palladium, and palladium alloy.

4. The surface-treated material according to claim 3, wherein the one or more metal layers are formed of two or more metal layers.

5. A method for producing the surface-treated material according to any one of claims 1 to 4, wherein the method comprising:
treating a surface of the electroconductive substrate at a treatment temperature of 20 to 60°C with an electric current density of 0.1 to 20 A/dm² for a treatment time of 1 to 100 seconds by using any of three activating solutions: (1) an activating solution containing 10 to 500 mL/L of any acid solution selected from sulfuric acid, nitric acid, hydrochloric acid, hydrofluoric acid, phosphoric acid, hydrobromic acid, hydroiodic acid, acetic acid, and oxalic acid, and 0.1 to 500 g/L, as a nickel metal content, of a nickel compound selected from the group consisting of nickel sulfate, nickel nitrate, nickel chloride, nickel bromide, nickel iodide, and nickel sulfamate; (2) an activating solution containing 10 to 500 mL/L of any acid solution selected from sulfuric acid, nitric acid, hydrochloric acid, hydrofluoric acid, phosphoric acid, hydrobromic acid, hydroiodic acid, acetic acid, and oxalic acid, and 0.1 to 500 g/L, as a cobalt metal content, of a cobalt compound selected from the group consisting of cobalt sulfate, cobalt nitrate, cobalt chloride, cobalt bromide, cobalt iodide, and cobalt sulfamate; and (3) an activating solution containing 10 to 500 mL/L of any acid solution selected from sulfuric acid, nitric acid, hydrochloric acid, hydrofluoric acid, phosphoric acid, hydrobromic acid, hydroiodic acid, acetic acid, and oxalic acid, and 0.1 to 500 g/L, as a copper metal content, of a copper compound selected from the group consisting of copper sulfate, copper nitrate, copper chloride, copper bromide, and copper sulfamate, as a step of surface activation treatment.

6. The method for producing the surface-treated material according to claim 5, wherein formation of the surface treatment coating film is performed by using a wet plating method.

7. A terminal formed with the surface-treated material according to any one of claims 1 to 4.

8. A connector produced with the surface-treated material according to any one of claims 1 to 4.

9. A bus bar produced with the surface-treated material according to any one of claims 1 to 4.

10. A lead frame produced with the surface-treated material according to any one of claims 1 to 4.

11. A member for medical use, the member produced with the surface-treated material according to any one of claims 1 to 4.

12. A shield case produced with the surface-treated material according to any one of claims 1 to 4.

13. A coil produced with the surface-treated material according to any one of claims 1 to 4.

14. A contact switch produced with the surface-treated material according to any one of claims 1 to 4.

15. A cable produced with the surface-treated material according to any one of claims 1 to 4.

16. A heat pipe produced with the surface-treated material according to any one of claims 1 to 4.

17. A memory disk produced with the surface-treated material according to any one of claims 1 to 4.
